# EUROPEAN PATENT APPLICATION

(11) **EP 1 647 924 A2**
(43) Date of publication of application: **19.04.2006**
(21) Application number: 05255950.7
(22) Date of filing: 24.09.2005
(51) Int. Cl.: G06N 1/00

(54) **Method and apparatus for increasing processing speed using quantum coprocessor**

(30) Priority: 13.10.2004 KR 2004081732
(71) Applicant: Samsung Electronics Co., Ltd., Suwon-si, Gyeonggi-Do (KR)
(72) Inventor: Han, Kuk-Hyun, Yeongtong-gu Suwon-si Gyeonggi-do (KR)
(74) Representative: Brandon, Paul Laurence

(57) **Abstract**

A method and apparatus for increasing a processing speed using a quantum coprocessor (100) are provided. The method includes receiving a command and data for performing a predetermined task, converting the command and the data into a signal having a format that the quantum coprocessor can receive if the command requests a quantum computation, sending the signal to the quantum coprocessor, receiving a processing result from the quantum coprocessor, and storing the processing result as a result of the command.

## Description

Apparatuses and methods consistent with the present invention relate to increasing a processing speed using a quantum coprocessor.

A quantum computer is a physical system that implements information in quantum mechanics and performs an appropriate operation on the information. As information is expressed in binary numbers according to whether voltage is supplied (labeled by 1) or not (labeled by 0) in a classical computer, an appropriate two level system (e.g., a spin 1/2 particle) is selected and binary information is expressed based on at which of two levels a system is located in a quantum computer. However, unlike classical mechanics, a superposition of the two levels is present in quantum mechanics. In other words, when the two levels are labeled by |0> and |1>, respectively, only two states of |0> and |1> exist in the classical computer, but a state of superposition like (|0 > +|1>) 2 additionally exists in the quantum computer. The superposition is an inherent characteristic of the quantum mechanics. When the characteristic of the quantum mechanics that distinguishes the quantum mechanics from the classical mechanics is used in an operation and processing of information, performance is increased prominently.

Unlike the classical computer, the quantum computer is expected to be applied to studies on very complicated fields such as the fields of genome (gene), meteorological phenomena, economics, and data mining that cannot solved today even by super computers. Conventional information processing methods, conventional communication theories, and conventional computers from personal computers to super computers have fundamental principles based on classical mechanics, in which each state is unitarily and irreversibly determined and the change of the state is also determined unitarily. In classical computers, one step of calculation is performed at one time. However, in quantum information processing, quantum communication theories, and quantum computers, a state in which all possible states are superposed on or entangled with each other is used. Accordingly, all possible states are handled with only one operation. Quantum parallelism serves as a solution to the problems that conventional technology cannot overcome in information processing and communication and computers that use a quantum phenomenon.

Although a quantum computer has a lot of possibilities, many people doubted the ability to realize and the value of the quantum computer. However, a factorization algorithm announced by Shor in 1994 eliminated the doubts of realizing the quantum computer. In a modem encryption system, a number obtained from prime factors that are difficult to be decomposed by a conventional computer even if calculated for several years is used as a key for decryption because the number can be obtained within one day by using Shor's algorithm. In addition, two years after the Shor's announcement, Grover announced a data search algorithm according to which a key for decryption can be obtained within several minutes just by applying numbers from 1 without factorization. Thereafter, governments in many countries started to support studies on quantum computing.

Many studies have concentrated on the development of a quantum computer. However, since the quantum computer is configured to perform a particular algorithm through a quantum network, it is difficult to provide universality. Despite of this, according to the results of the up-to-date studies, a fast operation speed of quantum computing greatly serves to improve the performance of a computer. Accordingly, a technique of combining the fast operation speed of quantum computing with a computer is required. U.S. Patent No. 6,787,794 discloses a quantum computer performing computation using a control gate and a qubit (quantum bit). However, it takes a large amount of time to configure an entire computer using a qubit and a control gate.

A coprocessor is an auxiliary processor performing an operation for a particular purpose at high speed. When a large amount of data or operation is needed as in numerical analysis, creation of a table, computer graphics, games, etc., a processing speed can be increased by using the coprocessor.

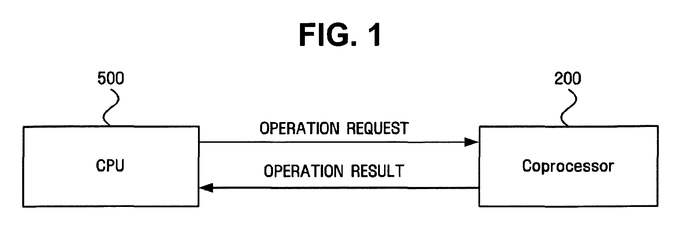

FIG. 1 is a block diagram of the structure of a central processing unit (CPU) 500 and a coprocessor 200 in a conventional digital computer.

The CPU 500 requests the coprocessor 100 to perform a particular operation. The coprocessor 200 performs the particular operation in response to the request of the CPU 500 and transmits the result of the particular operation to the CPU 500. The CPU 500 proceeds with a task using the result of the particular operation. A method of performing the particular operation using the coprocessor 200 is used because the conventional digital computer suitable for universal functions cannot efficiently process an arithmetic operation, a graphical operation, numerical analysis, etc.

A math coprocessor has been used to process floating points, calculation of great numbers, and complex equations, but a conventional computer cannot process operations requiring a large amount of computation such as factorization and complex problems, for example, NP-complete problems, in many mathematical computations. However, a complex operation can be easily performed in a quantum network combined with a quantum algorithm.

Accordingly, a processing speed can be increased by using a hybrid computer combining a universal CPU and a quantum coprocessor, in which the CPU processes normal algorithms and operations and the quantum coprocessor capable of quantum computing processes a large amount of data and complex operations.

Preferred embodiment of the present invention aims to provide a method and apparatus for solving problems that a conventional computer cannot solve by using a quantum coprocessor.

Preferred embodiment of the present invention also aims to provide a method and apparatus for applying a quantum processor to a conventional CPU, thereby accomplishing universality and practical use of quantum computing.

According to an aspect of the present invention, there is provided a method of increasing a processing speed using a quantum coprocessor, the method comprising receiving a command and data for performing a predetermined task; converting the command and the data into a signal having a format that the quantum coprocessor can receive if the command requests a quantum computation, sending the signal to the quantum coprocessor; receiving a processing result from the quantum coprocessor; and storing the processing result as a result of the command.

According to another aspect of the present invention, there is provided a method of increasing a processing speed using a quantum coprocessor, the method including receiving a signal requesting performance of a quantum computation from a central processing unit; extracting a command and data from the signal and sending the data to a quantum network that performs the quantum computation requested by the command; performing the quantum computation on the data using qubits constituting the quantum network; and sending a result of the quantum computation to the central processing unit.

According to still another aspect of the present invention, there is provided an apparatus for increasing a processing speed using a quantum coprocessor, the apparatus including a command receiver configured to receive a command and data for performing a predetermined task; a command processor configured to analyze the command to determine what operation is requested and process the command according to an analysis result; and a transceiver configured to convert the command and the data into a signal having a format that a quantum coprocessor can receive when the command requests a quantum computation, to transmit the signal to the quantum coprocessor, and to receive a result of processing the signal from the quantum coprocessor.

According to a further aspect of the present invention, there is provided a quantum coprocessor including a transceiver for receiving a signal requesting performance of a quantum computation from a central processing unit and configured to send a result of the quantum computation to the central processing unit, a controller configured to extract a command and data from the signal and to send the data to a quantum network to perform the quantum computation requested by the command, and a quantum network configured to receive the data from the controller and perform the quantum computation on the data using qubits.

Further features of the present invention are set out in the appended claims.

The present invention will become more apparent by describing in detail exemplary embodiments thereof with reference to the attached drawings in which:

FIG. 1 is a block diagram of the structure of a central processing unit (CPU) and a coprocessor in a conventional digital computer;

FIG. 2 is a block diagram of the structure of a CPU and a quantum coprocessor according to an exemplary embodiment of the present invention;

FIG. 3 illustrates a memory structure showing examples of a command of the CPU, according to an exemplary embodiment of the present invention;

FIG. 4 is a block diagram of the structure of a CPU, a quantum coprocessor, and a memory according to an exemplary embodiment of the present invention;

FIG. 5 is a block diagram of the structure of a CPU, a quantum coprocessor, and a memory according to another exemplary embodiment of the present invention; and

FIG. 6 is a flowchart of a procedure for performing a quantum computation using a CPU and a quantum coprocessor, according to an exemplary embodiment of the present invention.

The present invention will now be described more fully with reference to the accompanying drawings, in which exemplary embodiments of the invention are shown.

Terms used in the specification will be explained before setting forth the present invention.

### - Quantum Computing

Quantum computing or computation is processing data in a form of a quantum bit, i.e., a qubit. In a classical operation, one-bit information takes only one value of two logical values. However, in the quantum computing, a qubit can express two states at a time through superposition of the two states and allows a parallel operation to be performed.

### - Coprocessor

A coprocessor is a processor that exclusively performs a particular operation to increase the operating performance of a micro processor such as a CPU. A universal processor performs typical tasks and the coprocessor operates for a case where many particular operations are needed as in an arithmetic operation or a graphical operation so that a processing speed is increased. In preferred embodiment of the present invention, a coprocessor is implemented using quantum computing, universal tasks are processed using a CPU, and tasks such as factorization and data search that require a large amount of computation are processed using the coprocessor, thereby increasing performance.

### -Unitary Operation

In a classical computer, gates are spatially arranged based on circuits to perform an operation. However, in a quantum computer, a series of transformations are performed on a spin system comprised of quanta to perform a particular function. Here, a unitary operation is a temporal sequence of the transformations. In the classical computer, a CPU obtains a final result through arranged gates. In the quantum computer, transformations to be applied to quanta are sequentially lined and a result is obtained by subjecting the quanta to the sequence of the transformations. Such transformations applied to quanta are referred to as unitary transformations. A series of unitary transformation is referred to as a unitary operation.

The terms "module", "unit" and/or "table", as used herein, mean, but are not limited to, a software or hardware component, such as a Field Programmable Gate Array (FPGA) or Application Specific Integrated Circuit (ASIC), which performs certain tasks. A module/unit may advantageously be configured to reside on the addressable storage medium and configured to be executed on one or more processors. Thus, a module/unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules/units. In addition, the components and modules/units may be implemented such that they are executed one or more CPUs in a communication system.

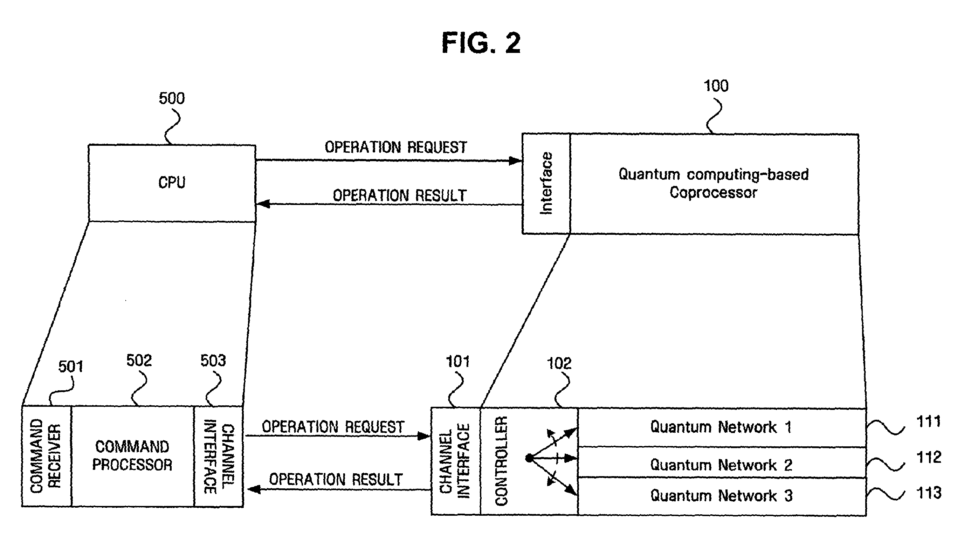

FIG. 2 is a block diagram of the structure of a CPU 500 and a quantum coprocessor 100 according to an exemplary embodiment of the present invention. The CPU 500 performs universal operations and processes universal tasks. The quantum coprocessor 100 performs a particular computation.

In detail, the CPU 500 may be implemented as a circuit, e.g., a semiconductor circuit, comprised of digital devices. The CPU 500 includes logic gates that can perform a universal function. Here, the universal function does not mean that a computer including the CPU 500 is necessarily universal but means that a computer including the CPU 500 is generally controlled by a command of the CPU 500 to perform a predetermined function. Although a single CPU is present in the exemplary embodiment illustrated in FIG. 2, two or more CPUs may be present when a parallel computer is used.

The CPU 500 may be divided into three large portions. A command receiver 501 receives a command that requests the CPU 500 to perform a certain task or a list of such commands. According to the structure of software or hardware, a command is stored in a memory in mechanical language or is directly transmitted from a circuit. The mechanical language stored in the memory is read by the command receiver 501 and is converted to an electrical signal to perform a computation. When commands are sequentially provided to the CPU 500 according to the structure of hardware, the command receiver 501 receives an electrical signal generated by the hardware.

The command receiver 501 transmits a received command to a command processor 502.

The command processor 502 processes the command received by the command receiver 501. The command can be processed by applying values constituting the command to an internal logic circuit included in the command processor 502 and inspecting the result of the application. Since the CPU 500 performs classical computing, it is comprised of a logic circuit constructed by a semiconductor circuit. The logic circuit obtains a result through a movement of electrons through a gate.

A transceiver transmits a command and data to the quantum coprocessor 100. When a command is for request of a quantum computation, the command processor 502 transmits the command to the quantum coprocessor 100 and receives a processing result from the quantum coprocessor 100. The transceiver transfers a command and data between the command processor 502 and the quantum coprocessor 100. In FIG. 2, a channel interface 503 is used as the transceiver.

The quantum coprocessor 100 is a coprocessor supporting quantum computing. The CPU 500 requests via the channel interface 503 the quantum coprocessor 100 to perform a quantum computation using a quantum algorithm. The quantum coprocessor 100 and the CPU 500 can transmit and receive a computation request and a computation result therebetween via diverse communication channels which may be implemented as diverse interfaces such as a Peripheral Component Interconnect (PCI), a Universal Serial Bus (USB), an RS232, a Small Computer System Interface (SCSI), an external I/O bus, etc.

The quantum coprocessor 100 includes a channel interface 101, a controller 102, and quantum networks 111, 112, and 113. The channel interface 101 receives a command from the CPU 500. A communication channel may be used as the channel interface 101. The channel interface 101 also transmits a computation result of the quantum networks 111, 112, and 113 to the CPU 500. The channel interface 101 receives and transmits a command and data from and to the CPU 500. When data is stored in a storage unit such as a memory, the channel interface 101 reads the data from the memory. In addition, the channel interface 101 stores a computation result in the memory.

Each of the quantum networks 111, 112, and 113 solves a particular problem. For example, each quantum network 111, 112, or 113 may be a network in which a Shor's algorithm for factorization or a Grover's data search algorithm is implemented. In other words, each of the quantum networks 111, 112, and 113 can solve a problem by implementing a particular quantum algorithm.

The controller 102 transmits data to one of the quantum networks 111, 112, and 113 according to a command generated by the CPU 500 and transmits resulting data received from the one of the quantum networks 111, 112, and 113 back to the CPU 500. The controller 102 selects one quantum network 111, 112, or 113 to perform a computation requested by a command received from the CPU 500 and transmits data to the selected quantum network 111, 112, or 113.

A quantum network can be configured using various methods.

A method using nuclear magnetic resonance (NMR), a method using a quantum dot, a method using an ion trap, a method using a cavity quantum electro-dynamics (QED), a method using a Josephson device, and a method using a group V element in a semiconductor have been studied.

NMR controls the direction of the spin of nuclei of hydrogen in a molecule, i.e., the up or down state of a qubit, using a magnetic field or a radio frequency. Since a combination of qubits can be controlled using interaction in a molecule, a computation can be performed using a plurality of qubits. Up to the present, the result of experiment using a maximum of three qubits has been published. The method using a quantum dot enables scaling, facilitates miniaturization and integration, and can use conventional semiconductor processes but requires nano-processing technology. The method using an ion trap facilitates the implementation of a qubit but has a limit of short lifetime of a qubit.

Examples of an algorithm that can be performed using a quantum network are as follows.

A Deutsch-Jozsa algorithm is a quantum algorithm that easily finds whether a function is constant or balanced using the superposition of qubits. Here, the function is mapping numerals from 0 to N-1 to {0, 1}. The function is constant when the function has a value of 0 or 1 on all inputs and is balanced when the function has a value of 0 on half of all inputs and a value of 1 on the other half of them.

When a function having inputs from 0 to N-1 and a result of 0 or 1 is given, a conventional computer needs a minimum of two inputs and a maximum of (N/2+1) inputs to find whether the function is constant or balanced. However, only one input is needed in calculation using quantum computing because in a quantum network using qubits existing in a superposition state, all inputs are superposed and a result is obtained through a phase shift of a qubit.

The Shor's algorithm solves within several minutes or hours factorization that is taken for several hundreds of years in a classical computer. The Shor's algorithm finds values which are relatively prime to each other by obtaining a period of a function using Quantum Fourier transform (QFT).

The Grover's algorithm is a quantum algorithm that finds an item satisfying a particular condition in a database. Typically, an average of N/2 searches is needed to find an item satisfying a particular condition among N items in an unsorted database. However, the Grover's algorithm can easily find the item using the overlap of vectors. The Grover's algorithm is realized using the superposition of quanta.

The above-described algorithms are just examples of a quantum algorithm using quantum computing and a quantum network according to the present invention is not restricted thereto.

To use such quantum network, a command set enabling a CPU to request data from a coprocessor is needed. In other words, to enable the CPU to request the coprocessor to perform a computation in software or hardware, the CPU must have a command set for the request of quantum computing.

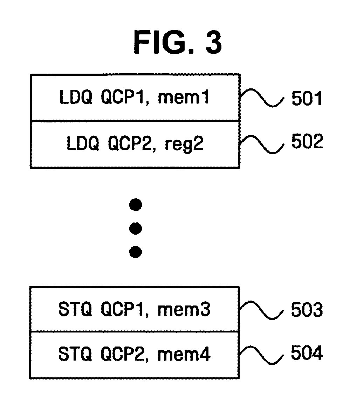

FIG. 3 illustrates a memory structure showing examples of a command of a CPU, according to an exemplary embodiment of the present invention. The memory structure includes a command for requesting a coprocessor to perform a computation and a command for receiving a computation result from the coprocessor.

A typical CPU command set includes a command and a parameter. FIG. 3 shows a command and two parameters. A first command syntax 501 uses a LoadQuantum (LDQ) that is a command for requesting a quantum coprocessor to perform a computation. The first command syntax 501 instructs to perform a quantum computation referred to as QCP1 and to use data stored in a memory position designated by mem1 as a parameter of the quantum computation. The QCP1 is a command requesting quantum computation such as the Shor's algorithm for factorization or the Grover's data search algorithm. The QCP1 is an identifier of a quantum network included in the quantum coprocessor. A second command syntax 502 uses the LDQ to perform a quantum computation and a QCP2 indicating a different quantum computation than the QCP1. The second command syntax 502 instructs to perform the quantum computation using a value stored in a register. To identify the register, reg2 is used as a parameter.

Third and fourth command syntaxes 503 and 504 are for receiving a result from the quantum coprocessor after the first and second command syntaxes 501 and 502 and data are sent to the quantum coprocessor. A StoreQuantum (STQ) is a command for receiving a result from the quantum coprocessor and storing it at a particular memory position. The third command syntax 503 includes a command and a parameter for storing a result of the quantum computation performed according to the first command syntax 501 and instructs to store the result of the QCP1 at a memory address of mem3. Similarly, the fourth command syntax 504 instructs to store a result of the quantum computation performed according to the second command syntax 502 at a memory address of mem4. The LDQ and the STQ are just examples and commands of the CPU need not to be the same as those in actual implementation.

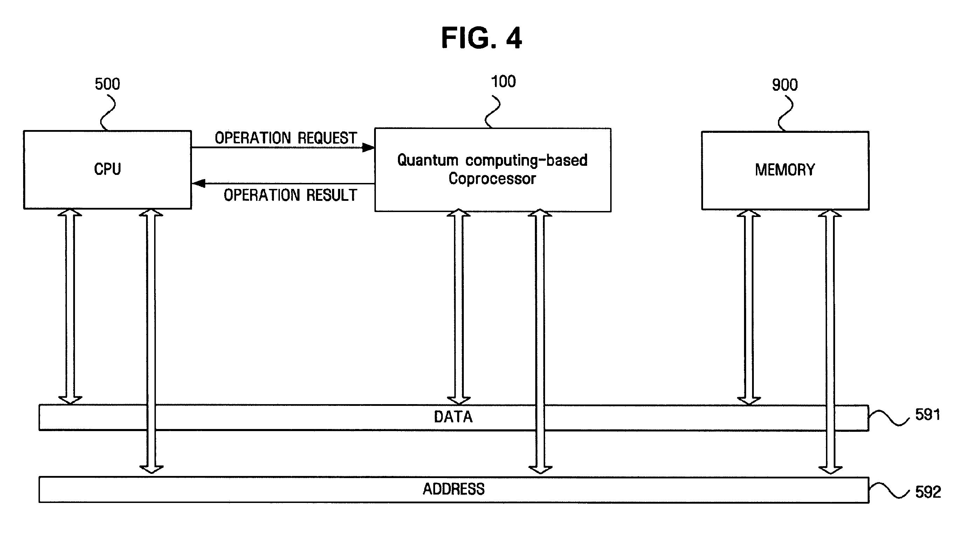

FIG. 4 is a block diagram of the structure of a CPU 500, a quantum coprocessor 100, and a memory 900 according to an exemplary embodiment of the present invention.

In the exemplary embodiment illustrate in FIG. 4, the quantum coprocessor 100 directly reads data from the memory 900. The CPU 500 sends a command for requesting to perform a quantum computation, as shown in FIG. 3, to the quantum coprocessor 100. A data value indicating a memory address may be sent together with the command. The memory address is transmitted through an address bus 592 that transfers address information. The data read from the memory 900 is transmitted through a data bus 591. The data bus 591 is a path for transferring data and the address bus 592 is a path for transferring an address.

The quantum coprocessor 100 reads data from a memory portion corresponding to the address, performs a quantum computation on the data, and returns the result of the quantum computation to the CPU 500 or stores data, i.e., the result of the quantum computation at another memory address according to a storing request received from the CPU 500. Upon receiving the storing request from the CPU 500, the quantum coprocessor 100 sends only information regarding success or failure of the quantum computation to the CPU 500 and stores the result of the quantum computation at the memory address contained in the storing request.

In FIG. 4, the memory 900 is an example of a storage unit storing a command and data. The command executed through the CPU 500 may be provided by a circuit instead of the memory 900. Accordingly, the storage unit may be a memory or a circuit such as a semiconductor circuit.

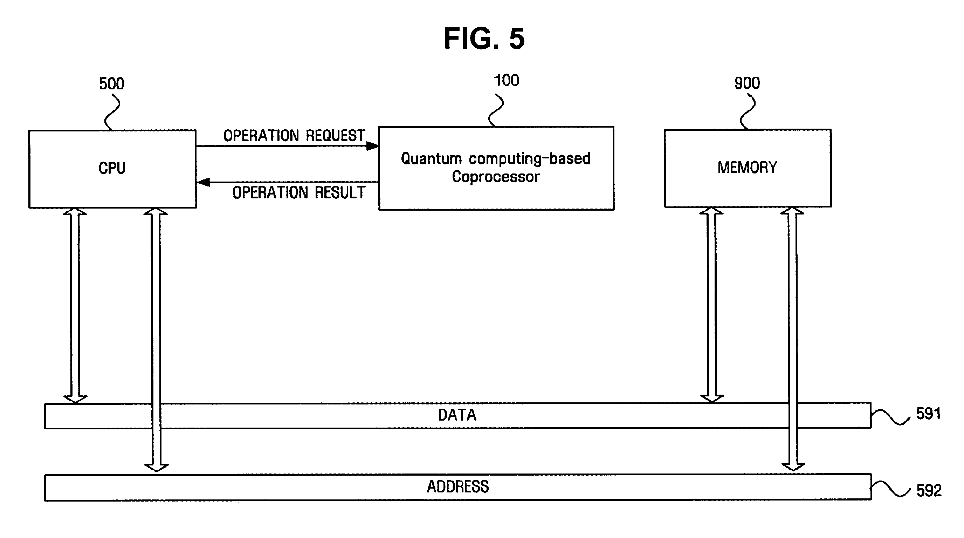

FIG. 5 is a block diagram of the structure of a CPU 500, a quantum coprocessor 100, and a memory 900 according to another exemplary embodiment of the present invention.

Unlike the quantum coprocessor 100 directly reading a memory address transmitted from the CPU 500 in the exemplary embodiment shown in FIG. 4, the quantum coprocessor 100 shown in FIG. 5 receives a command and data from the CPU 500, performs a quantum computation, and returns a result of the quantum computation to the CPU 500. In the exemplary embodiment illustrated in FIG. 5, the CPU 500 stores the result of the quantum computation in a storage unit such as the memory 900.

The CPU 500 sends a command and data to the quantum coprocessor 100. Since the CPU 500 reads data from a memory portion corresponding to a particular address and sends the data together with a command, the quantum coprocessor 100 does not need to read data with reference to a memory address.

Since the quantum coprocessor 100 and the memory 900 do not interact, the CPU 500 receives the result of the quantum computation from the quantum coprocessor 100 and stores it in the memory 900. Accordingly, unlike the quantum coprocessor 100 shown in FIG. 4, the quantum coprocessor 100 shown in FIG. 5 sends information regarding success or failure of the quantum computation and the result of the quantum computation to the CPU 500.

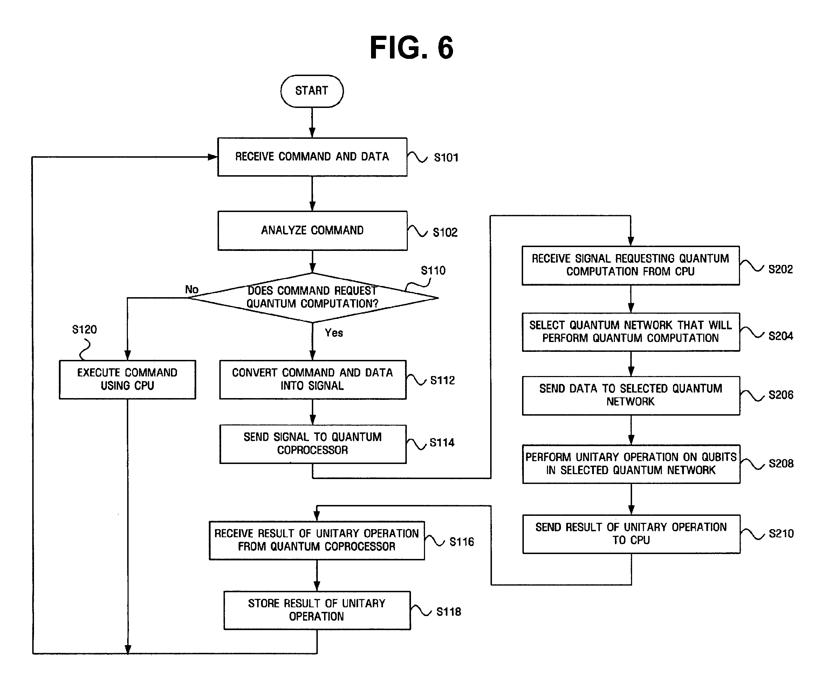

FIG. 6 is a flowchart of a procedure for performing a quantum computation using a CPU and a quantum coprocessor, according to an exemplary embodiment of the present invention.

In operation S101, the CPU receives a command and data stored in a memory or a different semiconductor circuit. The command stored in the memory is a mechanical language generated via compiling or interpreting software. In addition, the command may be stored in the memory and the data may be stored in a different circuit, and vice versa. The command stored in the semiconductor circuit is an electrical signal generated through a logic gate of the semiconductor circuit. An example of the command is the LDQ described with reference to FIG. 3.

In operation S102, the CPU analyzes the command to find out what operation is requested by the command. If it is determined that the command does not request a quantum computation in operation S 110, the CPU processes the command in operation 120. If it is determined that the command requests the quantum computation in operation S110, a procedure for transmitting the command to the quantum coprocessor is commenced. In operation S 112, the CPU converts the command and the data into a signal to request the quantum coprocessor to perform the quantum coprocessor. The command may be a reference for identifying the quantum computation. The data is an operand for execution of the command and may include a data value or a position where the data value is stored. When the quantum computation is to be performed on data stored at a particular address in the memory, the CPU will send a data value or an address that corresponds to the data to the quantum coprocessor. When the quantum coprocessor can read values from the data bus 591 and the address bus 592 shown in FIGS. 4 and 5, the CPU may send address information to the quantum coprocessor. In operation S114, the CPU sends the converted signal to the quantum coprocessor.

In operation S202, the quantum coprocessor receives the signal from the CPU. In operation S204, the quantum coprocessor determines a requested quantum computation based on the received signal and selects a quantum network to perform the requested quantum computation. The quantum network performs a particular quantum computation and the quantum coprocessor may include more than one quantum network. In operation S206, the quantum coprocessor sends the data to the selected quantum network. The data may be contained in the signal received from the CPU. Alternatively, the quantum coprocessor may detect a position address of a storage unit such as the memory from the signal and directly read the data from the memory. In operation S208, the quantum network performs a unitary operation on qubits. In operation S210, the quantum coprocessor sends a result of the unitary operation to the CPU.

In operation S 116, the CPU receives the result of the unitary operation from the quantum coprocessor. In operation S 118, the CPU stores the result of the unitary operation for subsequent computation or command execution. The result of the unitary operation may be stored in a storage unit such as a memory or may be stored in a hardware circuit by directly transmitting an electrical signal to the hardware circuit. Meanwhile, the quantum coprocessor can store the result of the unitary operation in the memory using the data bus 591 and the address bus 592, as shown in FIG. 4, and transmit to the CPU a position where the result is storied in the memory.

According to the method and apparatus, a complex operation can be solved using the quantum coprocessor within a short time.

In addition, without the development of universal quantum computers, the performance of quantum computing can be utilized in existing computers.

It will be understood by those of ordinary skill in the art that various changes in form and details may be made therein without departing from the spirit and scope of the present invention as defined by the following claims. Therefore, it is to be appreciated that the above described exemplary embodiments embodiment is are for purposes of illustration only and not to be construed as a limitation of the invention. The scope of the invention is given by the appended claims, rather than the preceding description, and all variations and equivalents which fall within the range of the claims are intended to be embraced therein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of increasing a processing speed using a quantum coprocessor (100), the method comprising:
receiving a command and data for performing a predetermined task;
converting the command and the data into a signal having a format that the quantum coprocessor can receive if the command requests a quantum computation;
sending the signal to the quantum coprocessor;
receiving a processing result from the quantum coprocessor; and
storing the processing result as a result of the command.

2. The method of claim 1, wherein the data comprises a value of an operand of the command.

3. The method of claim 1, wherein the data comprises an address where an operand of the command is stored or an identifier of a register where the operand is stored.

4. The method of any preceeding claim, wherein the quantum computation is one of factorization, database search, searching for a minimum or maximum value, and determining a balanced function,

5. The method of any preceeding claim, wherein the predetermined task is performed using at least one logic circuit and data in hardware.

6. A method of increasing a processing speed using a quantum coprocessor (100), the method comprising:
receiving a signal requesting performance of a quantum computation from a central processing unit (500);
extracting a command and data from the signal and sending the data to a quantum network (111, 112, 113) that performs the quantum computation requested by the command;
performing the quantum computation on the data using qubits constituting the quantum network; and
sending a result of the quantum computation to the central processing unit.

7. The method of claim 6 wherein the data comprises a value of an operand of the command.

8. The method of claim 6, wherein the data comprises an address where an operand of the command is stored or an identifier of a register where the operand is stored.

9. The method of claim 8, wherein the receiving the signal comprises reading an operand from a stored address or a stored register.

10. The method of any one of claims 6 - 9, wherein the quantum computation is one of factorization, database search, searching for a minimum or maximum value, and determining a balanced function.

11. The method of any one of claims 6 - 10, wherein the sending the result of the quantum computation comprises:
storing the result of the quantum computation at a position defined in advance; and
sending the position to the central processing unit (500).

12. An apparatus for increasing a processing speed using a quantum coprocessor (100), the apparatus comprising:
a command receiver (501) configured to receive a command and data for performing a predetermined task;
a command processor (502) configured to analyze the command to determine an operation being requested and process the command according to an analysis result; and
a transceiver (503) configured to convert the command and the data into a signal having a format that a quantum coprocessor can receive if the command requests a quantum computation, to transmit the signal to the quantum coprocessor, and to receive a result of processing the signal from the quantum coprocessor.

13. The apparatus of claim 12, wherein the data comprises a value of an operand of the command.

14. The apparatus of claim 12, wherein the data comprises an address where an operand of the command is stored or an identifier of a register where the operand is stored.

15. The apparatus of any one of claims 12 - 14, wherein the quantum computation is one of factorization, database search, searching for a minimum or maximum value, and determining a balanced function.

16. The apparatus of any one of claims 12 - 15, wherein the predetermined task is performed using at least one logic circuit and data in hardware.

17. A quantum coprocessor (100) comprising:
a transceiver (101) for receiving a signal requesting performance of a quantum computation from a central processing unit (500) and configured to send a result of the quantum computation to a central processing unit (500);
a controller (102) configured to extract a command and data from the signal and send the data to a quantum network that performs the quantum computation requested by the command; and
a quantum network (111, 112, 113) configured to receive the data from the controller and perform the quantum computation on the data using qubits.

18. The quantum coprocessor (100) of claim 17, wherein the data comprises a value of an operand of the command.

19. The quantum coprocessor (100) of claim 17, wherein the data comprises an address where an operand of the command is stored or an identifier of a register where the operand is stored.

20. The quantum coprocessor of claim 19, wherein the transceiver (101) reads an operand from a stored address or a stored register.

21. The quantum coprocessor of any one of claims 17 - 20, wherein the quantum computation is one of factorization, database search, searching for a minimum or maximum value, and determining a balanced function.

22. The quantum coprocessor of any one of claims 17 - 21, wherein the transceiver (101) is configured to store the result of the quantum computation at a position defined in advance and is configured to send the position to a central processing unit (500).
